# EUROPÄISCHE PATENTSCHRIFT

(11) **EP 3 814 194 B1**
(45) Veröffentlichungstag und Bekanntmachung des Hinweises auf die Patenterteilung: **04.09.2024**
(21) Anmeldenummer: 19752934.0
(22) Anmeldetag: 24.07.2019
(51) Int. Cl.: B61L 27/16, G06N 3/084

(54) **ENERGIEOPTIMIERUNG BEIM BETREIBEN EINER SCHIENENFAHRZEUGFLOTTE**
ENERGY OPTIMISATION DURING OPERATION OF A RAIL VEHICLE FLEET
OPTIMISATION DE LA CONSOMMATION D'ÉNERGIE DANS L'EXPLOITATION D'UN PARC DE VÉHICULES FERROVIAIRES

(30) Priorität: 31.08.2018 DE 102018214813
(43) Veröffentlichungstag der Anmeldung: 05.05.2021
(73) Patentinhaber: Siemens Mobility GmbH, 81739 München (DE)
(72) Erfinder: AUFDERHEIDE, Helge, 80634 München (DE); SIVALINGAM, Udhayaraj, 85716 Unterschleissheim (DE)
(74) Vertreter: Siemens Patent Attorneys
(86) Internationale Anmeldenummer: PCT/EP2019/069863
(87) Internationale Veröffentlichungsnummer: WO 2020/043397

(56) Entgegenhaltungen:
- EP-A1- 3 213 974
- DE-A1- 102011 106 440
- ZHOU RUI ET AL: "Optimal automatic train operation via deep reinforcement learning", 2018 TENTH INTERNATIONAL CONFERENCE ON ADVANCED COMPUTATIONAL INTELLIGENCE (ICACI), IEEE, 29 March 2018 (2018-03-29), pages 103 - 108, XP033356736, DOI: 10.1109/ICACI.2018.8377589

## Beschreibung

Die Erfindung betrifft ein Verfahren zum energieoptimierten Betreiben einer Schienenfahrzeugflotte, die mehrere Schienenfahrzeuge umfasst, von denen jedes ein Zustandsbeeinflussungssystem zur Fahrzeugzustandsbeeinflussung aufweist, welches elektrische Energie erzeugen und/oder verbrauchen kann. Ferner betrifft die Erfindung eine Schienenfahrzeugflotte mit mehreren derartigen Schienenfahrzeugen.

Üblicherweise hat ein Schienenfahrzeug im Betrieb ein oder mehrere vorgegebene Sollkriterien einzuhalten. Zum Beispiel kann vorgesehen sein, dass das Schienenfahrzeug einen vorgegebenen Fahrplan einhalten soll, eine maximal zulässige Fahrgeschwindigkeit nicht überschreiten darf und/oder eine Innenraumtemperatur innerhalb eines vorgegebenen Temperaturintervalls halten soll.

In der Regel wird ein Schienenfahrzeug mithilfe seines Zustandsbeeinflussungssystems derart betrieben, dass das vorgegebene Sollkriterium bzw. die vorgegebenen Sollkriterien (weitestgehend) eingehalten wird/werden. Ein Zustandsbeeinflussungssystem eines Schienenfahrzeugs dient dazu, einen Fahrzeugzustand des Schienenfahrzeugs zu beeinflussen. Beispielsweise kann das Zustandsbeeinflussungssystem dazu dienen, die Fahrgeschwindigkeit des Schienenfahrzeugs zu verändern und/oder eine Innenraumtemperatur des Schienenfahrzeugs zu verändern.

Bei einer Zustandsänderung des Schienenfahrzeugs kann das Zustandsbeeinflussungssystem elektrische Energie verbrauchen und/oder erzeugen. Zum Beispiel kann das Zustandsbeeinflussungssystem zum Beschleunigen des Schienenfahrzeugs mittels eines elektrischen Traktionsmotors elektrische Energie verbrauchen oder beim Abbremsen des Schienenfahrzeugs mittels einer Rekuperationsbremse elektrische Energie erzeugen.

Bei einer Schienenfahrzeugflotte, die mehrere Schienenfahrzeuge umfasst, hat in der Regel jedes der Schienenfahrzeuge im Betrieb ein oder mehrere eigene Sollkriterien einzuhalten. Entsprechend werden die einzelnen Schienenfahrzeuge der Schienenfahrzeugflotte üblicherweise mithilfe ihrer Zustandsbeeinflussungssysteme so betrieben, dass die Schienenfahrzeuge diese Sollkriterien (weitestgehend) einhalten.

Im Allgemeinen hat ein Betreiber einer Schienenfahrzeugflotte den Wunsch, die elektrische Gesamtenergiebilanz der Zustandsbeeinflussungssysteme der Schienenfahrzeugflotte zu optimieren (das heißt, den elektrischen Energieverbrauch der Zustandsbeeinflussungssysteme der Schienenfahrzeugflotte zu reduzieren und/oder die elektrische Energieerzeugung der Zustandsbeeinflussungssysteme zu erhöhen).

Die Druckschrift EP 3 213 974 A1 lehrt ein Verfahren zum Betreiben von Schienenfahrzeugen. Der Aufsatz "Optimal automatic train operation via deep reinforcement learning" von ZHOU RUI ET AL, 2018 TENTH INTERNATIONAL CONFERENCE ON ADVANCED COMPUTATIONAL INTELLIGENCE (ICACI), IEEE, 29. März 2018, Seiten 103-108 beschreibt eine Methode zur Energieoptimierung mittels deep reinforcement learning.

Die Offenlegungsschrift DE 10 2011 106 440 A1 offenbart ein Verfahren nach dem Oberbegriff des unabhängigen Patentanspruchs 1.

Eine Aufgabe der vorliegenden Erfindung ist es, einen energieoptimierten Betrieb einer mehrere Schienenfahrzeuge umfassenden Schienenfahrzeugflotte zu ermöglichen.

Diese Aufgabe wird erfindungsgemäß gelöst durch ein Verfahren nach Anspruch 1 sowie durch eine Schienenfahrzeugflotte nach Anspruch 13.

Vorteilhafte Ausgestaltungen der Erfindung sind Gegenstand der abhängigen Patentansprüche sowie der nachfolgenden Beschreibung.

Bei dem erfindungsgemäßen Verfahren zum energieoptimierten Betreiben einer Schienenfahrzeugflotte umfasst die Schienenfahrzeugflotte n Schienenfahrzeuge, von denen jedes ein Zustandsbeeinflussungssystem zur Fahrzeugzustandsbeeinflussung, welches elektrische Energie erzeugen und/oder verbrauchen kann, sowie eine mittels eines Maschinen-Lernverfahrens trainierte Rechnereinheit aufweist, wobei n eine natürliche Zahl und größer als 1 ist. Außerdem wird beim erfindungsgemäßen Verfahren für alle i von 1 bis n im Betrieb der Schienenfahrzeugflotte von der Rechnereinheit des i-ten Schienenfahrzeugs der n Schienenfahrzeuge unter Beachtung mindestens eines Sollkriteriums für das i-te Schienenfahrzeug sowie in Abhängigkeit von fahrzeug-, orts- und/oder streckenbezogenen Statusparametern eine auf das Zustandsbeeinflussungssystem des i-ten Schienenfahrzeugs anzuwendende Aktion ausgewählt, die bei Anwendung auf das Zustandsbeeinflussungssystem des i-ten Schienenfahrzeugs zur Optimierung einer elektrischen Gesamtenergiebilanz der Zustandsbeeinflussungssysteme der Schienenfahrzeugflotte beiträgt, und die ausgewählte Aktion auf das Zustandsbeeinflussungssystem des i-ten Schienenfahrzeugs angewendet, wobei i eine natürliche Zahl ist.

Die Verwendung von mittels eines Maschinen-Lernverfahrens trainierter Rechnereinheiten zum Auswählen der Aktionen für die Zustandsbeeinflussungssysteme der Schienenfahrzeugflotte hat den Vorteil, dass darauf verzichtet werden kann, eine Vielzahl situationsabhängiger Regeln in den Rechnereinheiten der Schienenfahrzeugflotte zu implementieren, um für die Zustandsbeeinflussungssysteme der Schienenfahrzeugflotte in der jeweiligen Situation Aktionen auszuwählen, welche eine Optimierung der elektrischen Gesamtenergiebilanz der Zustandsbeeinflussungssysteme der Schienenfahrzeugflotte ermöglichen.

Da die Rechnereinheiten der Schienenfahrzeugflotte mittels eines Maschinen-Lernverfahrens trainiert sind, können die Rechnereinheiten aufgrund ihres bisherigen (ggf. noch andauernden) Trainings ohne eine explizite Implementierung situationsabhängiger Regeln selbstständig anhand ihres bislang erlernten Wissens in der jeweiligen Situation Aktionen für die Zustandsbeeinflussungssysteme auswählen, die eine Optimierung der elektrischen Gesamtenergiebilanz der Zustandsbeeinflussungssysteme ermöglichen. Mit anderen Worten, das auf einem Maschinen-Lernverfahren basierende Training der Rechnereinheiten der Schienenfahrzeugflotte verleiht den Schienenfahrzeugen eine Art "Schwarmintelligenz", welche die Schienenfahrzeuge dazu befähigt, in der jeweiligen Situation passende Aktionen für ihre Zustandsbeeinflussungssysteme auszuwählen, die eine Optimierung der elektrischen Gesamtenergiebilanz der Zustandsbeeinflussungssysteme ermöglichen.

Die Tatsache, dass das Auswählen der Aktion für das Zustandsbeeinflussungssystem des i-ten Schienenfahrzeugs unter Beachtung mindestens eines Sollkriteriums für das i-te Schienenfahrzeug sowie in Abhängigkeit fahrzeug-, orts- und/oder streckenbezogenen Statusparameter erfolgt, ermöglicht der Rechnereinheit des i-ten Schienenfahrzeugs, die Aktion für das Zustandsbeeinflussungssystem in der jeweiligen Situation unter der Randbedingung zu wählen, dass die Aktion dem i-ten Schienenfahrzeugs ein (zumindest näherungsweises) Einhalten des entsprechenden Sollkriteriums erlaubt.

Die Formulierung "für alle i von 1 bis n" bezieht sich auch auf die in der nachfolgenden Beschreibung erwähnten, bevorzugten Ausführungsformen und auf die abhängigen Patentansprüche, in denen auf das "i-te" Schienenfahrzeug Bezug genommen wird. Mit anderen Worten, die nachfolgend beschriebenen Merkmale, bei denen auf das "i-te" Schienenfahrzeug Bezug genommen wird, gelten jeweils für alle n Schienenfahrzeuge der Schienenfahrzeugflotte.

Bei den Schienenfahrzeugen der Schienenfahrzeugflotte kann es sich jeweils um einen einzelnen Schienenfahrzeugwagen oder um einen Verbund aus mehreren miteinander gekuppelten Schienenfahrzeugwagen handeln.

Unter einem Zustandsbeeinflussungssystem eines Schienenfahrzeugs ist vorliegend ein System zu verstehen, dessen Komponenten einen Fahrzeugzustand des Schienenfahrzeugs, wie zum Beispiel dessen Fahrgeschwindigkeit, eine Innenraumtemperatur des Schienenfahrzeugs oder dergleichen, beeinflussen können. Bei einer Fahrzeugzustandsbeeinflussung kann vom Zustandsbeeinflussungssystem bzw. von zumindest einigen seiner Komponenten elektrische Energie verbraucht und/oder erzeugt werden.

Der Verbrauch an elektrischer Energie durch das Zustandsbeeinflussungssystem des jeweiligen Schienenfahrzeugs geht zweckmäßigerweise mit einem negativen Vorzeichen in die elektrische Gesamtenergiebilanz der Zustandsbeeinflussungssysteme der n Schienenfahrzeuge ein, während die Erzeugung elektrischer Energie durch das Zustandsbeeinflussungssystem des jeweiligen Schienenfahrzeugs zweckmäßigerweise mit einem positiven Vorzeichen in die Gesamtenergiebilanz eingeht.

Das Zustandsbeeinflussungssystem des jeweiligen Schienenfahrzeugs ist vorzugsweise dazu eingerichtet, elektrische Energie aus einem elektrischen Energie-/Stromnetz zu beziehen und/oder elektrische Energie in das Energie-/Stromnetz einzuspeisen.

In bevorzugter Weise werden die Schienenfahrzeuge der Schienenfahrzeugflotte über dasselbe Energie-/Stromnetz mit elektrischer Energie versorgt. Das jeweilige Schienenfahrzeug der Schienenfahrzeugflotte kann insbesondere über eine Fahrleitung, wie zum Beispiel eine Oberleitung oder eine Stromschiene, mit elektrischer Energie versorgt werden.

Die einzelnen Schienenfahrzeuge der Schienenfahrzeugflotte können insbesondere auf demselben Schienennetz unterwegs sein bzw. sich auf demselben Schienennetz befinden.

Zweckmäßigerweise ist die Rechnereinheit des jeweiligen Schienenfahrzeugs mit einem Datenspeicher ausgestattet, in welchem Daten und/oder ein Computerprogramm hinterlegt werden können/kann. Weiter ist es zweckmäßig, wenn die Rechnereinheit des jeweiligen Schienenfahrzeugs mit einem Prozessor ausgestattet ist, auf welchem ein Computerprogramm ausführbar ist.

Das Auswählen der jeweiligen Aktion erfolgt bei den n Schienenfahrzeugen nicht notwendigerweise gleichzeitig. Mit anderen Worten, das Auswählen der jeweiligen Aktion von der jeweiligen Rechnereinheit kann bei den einzelnen Schienenfahrzeugen der Schienenfahrzeugflotte zeitversetzt erfolgen. Des Weiteren kann das Anwenden der jeweiligen Aktion bei den einzelnen Schienenfahrzeugen der Schienenfahrzeugflotte zeitversetzt erfolgen.

Die Statusparameter, in Abhängigkeit derer von der Rechnereinheit des jeweiligen Schienenfahrzeugs, die Aktion ausgewählt wird, beziehen sich auf das jeweilige Schienenfahrzeug (insbesondere auf dessen Fahrzustand), auf den Ort, an dem sich das jeweilige Schienenfahrzeug befindet, und/oder auf die dem Schienenfahrzeug vorausliegende Fahrstrecke.

Die Aktion, die von der Rechnereinheit des i-ten Schienenfahrzeugs ausgewählt wird, kann eine Aktion sein, die auf eine einzelne Komponente des Zustandsbeeinflussungssystems des i-ten Schienenfahrzeugs anzuwenden ist. Alternativ kann die Aktion, die von der Rechnereinheit des i-ten Schienenfahrzeugs ausgewählt wird, mehrere, insbesondere unterschiedliche Teilaktionen umfassen, die auf verschiedene Komponenten des Zustandsbeeinflussungssystems des i-ten Schienenfahrzeugs anzuwenden sind. Zweckmäßigerweise wird die von der Rechnereinheit des i-ten Schienenfahrzeugs ausgewählte Aktion auf entsprechender/-n Komponente/-n des Zustandsbeeinflussungssystems des i-ten Schienenfahrzeugs angewendet.

In bevorzugter Weise wird die von der jeweiligen Rechnereinheit ausgewählte Aktion aus einer Liste möglicher Aktionen ausgewählt, die zum Beispiel in der jeweiligen Rechnereinheit bzw. in deren Datenspeicher hinterlegt sein kann.

Bei einer möglichen Ausführungsvariante der Erfindung wird die von der Rechnereinheit des jeweiligen Schienenfahrzeugs ausgewählte Aktion über eine Ausgabevorrichtung, wie zum Beispiel ein Display, des jeweiligen Schienenfahrzeugs ausgegeben und das Anwenden der ausgewählten Aktion auf das Zustandsbeeinflussungssystems des Schienenfahrzeugs von einem Fahrzeugführer über ein Bedienelement des Schienenfahrzeugs initiiert. Alternativ kann die von der Rechnereinheit des jeweiligen Schienenfahrzeugs ausgewählte Aktion von der Rechnereinheit automatisch, d. h. ohne vorherige Freigabe durch einen Fahrzeugführer (und ggf. ohne den Fahrzeugführer entsprechend zu benachrichtigen), initiiert werden. In letztgenanntem Fall kann die Rechnereinheit des jeweiligen Schienenfahrzeugs beispielsweise automatisch ein Steuersignal zur Ausführung der ausgewählten Aktion erzeugen und dieses an die entsprechende/-n Komponenten des Zustandsbeeinflussungssystems des Schienenfahrzeugs übermitteln.

Die von der Rechnereinheit des i-ten Schienenfahrzeugs ausgewählte Aktion kann ein Einschalten einer oder mehrerer Komponenten des Zustandsbeeinflussungssystems des i-ten Schienenfahrzeugs, ein Ausschalten einer oder mehrerer Komponenten dieses Zustandsbeeinflussungssystems, ein Verändern einer Stellgröße (wie zum Beispiel einer Drehzahl) einer oder mehrerer Komponenten dieses Zustandsbeeinflussungssystems und/oder ein Verändern eines Betriebsmodus einer oder mehrerer Komponenten dieses Zustandsbeeinflussungssystems umfassen.

Das zuvor erwähnte Sollkriterium für das i-te Schienenfahrzeug kann sich insbesondere auf einen vom i-ten Schienenfahrzeug einzuhaltenden Fahrplan beziehen. Zum Beispiel kann das Sollkriterium für das i-te Schienenfahrzeug festlegen, um welche Zeitspanne die Ankunftszeit des i-ten Schienenfahrzeugs an einem Bahnhof/Haltepunkt von der laut Fahrplan vorgesehenen Ankunftszeit des i-ten Schienenfahrzeugs maximal abweichen darf.

Ferner kann vorgesehen sein, dass die Aktion von der Rechnereinheit des i-ten Schienenfahrzeugs unter Beachtung mehrerer Sollkriterien für das i-te Schienenfahrzeug ausgewählt wird.

Zumindest ein Teil der Sollkriterien beziehen sich auf eine Fahrzeuginnenraumtemperatur des i-ten Schienenfahrzeugs, eine Temperatur einer (zu kühlenden) Fahrzeugkomponente des i-ten Schienenfahrzeugs, eine Obergrenze für eine Fahrleitungsspannung am Ort des i-ten Schienenfahrzeugs, eine Untergrenze für eine Fahrleitungsspannung am Ort des i-ten Schienenfahrzeugs, einen zulässigen Mindestabstand zu einem vorausfahren Schienenfahrzeug und/oder einen zulässigen Mindestabstand zu einem nachfolgenden Schienenfahrzeug. Zweckmäßigerweise ist das jeweilige Sollkriterium im Datenspeicher der Rechnereinheit des i-ten Schienenfahrzeugs hinterlegt.

Durch die Berücksichtigung von Sollkriterien für das i-te Schienenfahrzeug, die sich auf die Unter- und Obergrenze für die Fahrleitungsspannung am Ort des i-ten Schienenfahrzeugs beziehen, ist es beispielsweise möglich, die Schienenfahrzeuge der Schienenfahrzeugflotte so zu betreiben, dass die Fahrleitungsspannung am Ort des jeweiligen Schienenfahrzeugs stabil (zwischen der Obergrenze und der Untergrenze) gehalten wird. So kann am Ort des jeweiligen Schienenfahrzeugs eine stark von ihrem Normalwert abweichende Fahrleitungsspannung (also eine die Ober-/Untergrenze über-/unterschreitende Fahrleitungsspannung), die beispielsweise zu Schäden am jeweiligen Schienenfahrzeug und/oder zu dessen Notabschaltung führen könnte, vermieden werden.

Die Statusparameter, in Abhängigkeit derer die Aktion von der Rechnereinheit des i-ten Schienenfahrzeugs ausgewählt wird, können insbesondere eine momentane Fahrleitungsspannung am Ort des i-ten Schienenfahrzeugs und/oder einen oder mehrere statistische Fahrleitungsspannungswerte am Ort des i-ten Schienenfahrzeugs umfassen.

Ein statistischer Fahrleitungsspannungswert, in Abhängigkeit dessen die Aktion von der Rechnereinheit des i-ten Schienenfahrzeugs ausgewählt wird, kann beispielsweise ein Durchschnitts- bzw. Normalwert der Fahrleitungsspannung am Ort des i-ten Schienenfahrzeugs sein. Ein anderer statistischer Fahrleitungsspannungswert, in Abhängigkeit dessen die Aktion von der Rechnereinheit des i-ten Schienenfahrzeugs ausgewählt wird, kann zum Beispiel eine durchschnittliche Spannungstoleranz bzw. durchschnittliche Spannungsschwankung der Fahrleitungsspannung am Ort des i-ten Schienenfahrzeugs sein.

Vorteilhafterweise ist die Aktion, die von der Rechnereinheit des i-ten Schienenfahrzeugs gewählt wird, eine Aktion die dazu beiträgt, dass die momentane Fahrleitungsspannung am Ort des i-ten Schienenfahrzeugs möglichst wenig vom Durchschnitts-/Normalwert der Fahrleitungsspannung am Ort des i-ten Schienenfahrzeugs abweicht.

Der jeweilige statistische Fahrleitungsspannungswert am Ort des i-ten Schienenfahrzeugs, in Abhängigkeit dessen die Aktion von der Rechnereinheit des i-ten Schienenfahrzeugs ausgewählt wird, kann in einem Datenspeicher des i-ten Schienenfahrzeugs hinterlegt sein oder alternativ per Funk von einer Leitstelle an die Rechnereinheit des i-ten Schienenfahrzeugs übermittelt werden. Ferner kann der jeweilige statistische Fahrleitungsspannungswert ein zeitabhängiger, insbesondere ein uhrzeit- und/oder datumsabhängiger, Spannungswert sein.

Bei einer bevorzugten Ausführungsvariante der Erfindung wird die Aktion, die von der Rechnereinheit des i-ten Schienenfahrzeugs ausgewählt wird, in Abhängigkeit der Abweichung zwischen der momentanen Fahrleitungsspannung am Ort des i-ten Schienenfahrzeugs und der mittleren Fahrleitungsspannung am Ort des i-ten Schienenfahrzeugs ausgewählt.

Die Statusparameter, in Abhängigkeit derer die Aktion von der Rechnereinheit des i-ten Schienenfahrzeugs ausgewählt wird, können unter anderem eine Position des i-ten Schienenfahrzeugs, eine Fahrgeschwindigkeit des i-ten Schienenfahrzeugs, einen Bremssystemzustand des i-ten Schienenfahrzeugs, mindestens einen Wetterparameter am Ort des i-ten Schienenfahrzeugs, einen Abstand zu einem vorausfahrenden Schienenfahrzeug, einen Abstand zu einem nachfolgenden Schienenfahrzeug, mindestens einen Infrastrukturparameter und/oder mindestens einen Fahrstreckenparameter umfassen.

Wetterparameter können zum Beispiel eine Außentemperatur und/oder eine Niederschlagsmenge pro Zeiteinheit umfassen. Fahrstreckenparameter können unter anderem eine maximal erlaubte Fahrgeschwindigkeit in einem vorausliegenden Fahrstreckenabschnitt, einen Kurvenradius des vorausliegenden Fahrstreckenabschnitts und/oder eine Steigung des vorausliegenden Fahrstreckenabschnitts umfassen. Infrastrukturparameter können zum Beispiel die Zustände von streckenseitigen Signal-Anlagen und/oder Stellungen von Weichen umfassen.

Zweckmäßigerweise umfasst das Zustandsbeeinflussungssystem des jeweiligen Schienenfahrzeugs mindestens einen elektrischen Traktionsmotor. Es kann vorgesehen sein, dass die von der Rechnereinheit des i-ten Schienenfahrzeugs ausgewählte Aktion zumindest auf den Traktionsmotor des Zustandsbeeinflussungssystems des i-ten Schienenfahrzeugs angewendet wird. Hierbei kann insbesondere eine Fahrgeschwindigkeit des i-ten Schienenfahrzeugs verändert, d. h. erhöht oder verringert, werden. Eine Verringerung der Fahrgeschwindigkeit des i-ten Schienenfahrzeugs kann mittels dessen Traktionsmotor beispielsweise bewirkt werden, indem der Traktionsmotor vom Traktions- in den Bremsbetrieb umgeschaltet wird.

Ferner kann das Zustandsbeeinflussungssystem des jeweiligen Schienenfahrzeugs mindestens eine Klimaanlage umfassen. Es kann vorgesehen sein, dass die von der Rechnereinheit des i-ten Schienenfahrzeugs ausgewählte Aktion zumindest auf die Klimaanlage des Zustandsbeeinflussungssystems des i-ten Schienenfahrzeugs angewendet wird. Dabei kann zum Beispiel eine Innenraumtemperatur des i-ten Schienenfahrzeugs erhöht oder verringert werden.

Weiter ist es zweckmäßig, wenn das Zustandsbeeinflussungssystem des jeweiligen Schienenfahrzeugs mindestens ein Bremssystem aufweist. Es kann vorgesehen sein, dass die von der Rechnereinheit des i-ten Schienenfahrzeugs ausgewählte Aktion zumindest auf das Bremssystem des i-ten Schienenfahrzeugs angewendet wird. Hierbei kann beispielsweise die Fahrgeschwindigkeit des i-ten Schienenfahrzeugs verringert werden.

Des Weiteren kann das Zustandsbeeinflussungssystem des jeweiligen Schienenfahrzeugs mindestens einen Energiespeicher zum Bereitstellen elektrischer Energie aufweisen. In diesem Fall kann vorgesehen sein, dass die von der Rechnereinheit des i-ten Schienenfahrzeugs ausgewählte Aktion zumindest auf den Energiespeicher des Zustandsbeeinflussungssystems des i-ten Schienenfahrzeugs angewendet wird. Dabei kann der Energiespeicher des i-ten Schienenfahrzeugs insbesondere geladen oder entladen werden.

Der Energiespeicher kann beispielsweise eine galvanische Zelle oder eine Zusammenschaltung mehrerer, insbesondere gleichartiger galvanischer Zellen umfassen. Alternativ oder zusätzlich kann der Energiespeicher einen Kondensator, wie zum Beispiel einen sogenannten Superkondensator, oder eine Zusammenschaltung mehrerer, insbesondere gleichartiger Kondensatoren umfassen.

Bei einer möglichen Ausgestaltungsvariante umfasst der Energiespeicher ein Schwungrad sowie einen Elektromotor, der an das Schwungrad gekoppelt/koppelbar ist und als Generator betreibbar ist. Unter Verwendung elektrischer Energie kann der Elektromotor das Schwungrad antreiben. Das Schwungrad kann die Energie, die es vom Elektromotor aufnimmt, als Rotationsenergie speichern. Umgekehrt kann das Schwungrad, wenn der Energiespeicher elektrische Energie bereitstellen soll, seine Rotationsenergie nutzen, um den Elektromotor in dessen Generatorbetrieb anzutreiben.

Die Rechnereinheiten der n Schienenfahrzeuge umfassen erfindungsgemäß jeweils ein mittels eines Maschinen-Lernverfahrens trainiertes künstliches neuronales Netz, insbesondere ein tiefes künstliches neuronales Netz. Künstliche neuronale Netze haben sich dabei bewährt, anhand von Trainingsdaten komplexe Zusammenhänge/Abhängigkeiten zwischen verschiedenen Parametern und einzuhaltenden Sollkriterien zu erlernen. Zweckmäßigerweise ist das künstliche neuronale Netz der jeweiligen Rechnereinheit in deren Datenspeicher implementiert. Vorzugsweise erfolgt das Auswählen der Aktion durch die Rechnereinheit des i-ten Schienenfahrzeugs mithilfe ihres künstlichen neuronalen Netzes.

Bei einer bevorzugten Ausführungsvariante der Erfindung ist das künstliche neuronale Netz der jeweiligen Rechnereinheit ein Perzeptron-Netz, insbesondere ein mehrlagiges Perzeptron-Netz.

Die künstlichen neuronalen Netze der n Rechnereinheiten können die gleiche Netztopologie aufweisen. Alternativ können die künstlichen neuronalen Netze der n Rechnereinheiten unterschiedliche (Netz-)Topologien aufweisen. Ferner können die künstlichen neuronalen Netze der n Rechnereinheiten derart ausgebildet sein, dass die künstlichen neuronalen Netze ein zeitabhängiges und/oder stochastische Verhalten aufweisen, insbesondere um Resonanzphänomene zu vermeiden.

Die Rechnereinheit des i-ten Schienenfahrzeugs, insbesondere deren künstliches neuronales Netz, wird aus einem zunächst untrainierten Zustand heraus mittels des besagten Maschinen-Lernverfahrens dazu trainiert, im Betrieb der Schienenfahrzeugflotte unter Beachtung eines mindestens Sollkriteriums für das i-te Schienenfahrzeug sowie in Abhängigkeit von fahrzeug-, orts- und/oder streckenbezogenen Statusparametern eine auf das Zustandsbeeinflussungssystem des i-ten Schienenfahrzeugs anzuwendende Aktion auszuwählen, die bei Anwendung auf das Zustandsbeeinflussungssystem des i-ten Schienenfahrzeugs zur Optimierung der elektrischen Gesamtenergiebilanz der Zustandsbeeinflussungssysteme der Schienenfahrzeugflotte beiträgt. Das Trainieren der jeweiligen Rechnereinheit erfolgt zweckmäßigerweise anhand von Trainingsdaten, die beispielsweise auf einer Simulation oder Messungen beruhen können.

In bevorzugter Weise ist das Maschinen-Lernverfahren, mittels welchem die jeweilige Rechnereinheit trainiert wird, ein überwachtes Maschinen-Lernverfahren (engl. supervised learning), wie zum Beispiel ein Backpropagation-Verfahren oder ein Online-Verfahren.

Das Trainieren kann mehrere aufeinanderfolgende Trainingsdurchläufe umfassen. Zweckmäßigerweise wird in jedem Trainingsdurchlauf an die Rechnereinheit des i-ten Schienenfahrzeus ein Satz von Statusparametern übermittelt und von der Rechnereinheit des i-ten Schienenfahrzeugs in Abhängigkeit der von ihr empfangenen Statusparameter sowie unter Beachtung mindestens eines Sollkriteriums für das i-te Schienenfahrzeug eine Aktion ausgewählt, die auf das Zustandsbeeinflussungssystem des i-ten Schienenfahrzeugs anzuwenden ist.

Weiter ist es zweckmäßig, wenn in jedem Trainingsdurchlauf anhand der von den Rechnereinheiten der n Schienenfahrzeuge bei dem jeweiligen Trainingsdurchlauf ausgewählten Aktionen eine elektrische Gesamtenergiebilanz der Zustandsbeeinflussungssysteme der Schienenfahrzeugflotte berechnet wird und anhand dieser berechneten Gesamtenergiebilanz für jede der Rechnereinheiten eine Belohnung ermittelt wird.

Der Satz von Statusparametern, der bei dem jeweiligen Trainingsdurchlauf an die Rechnereinheit des i-ten Schienenfahrzeugs übermittelt wird, kann beispielsweise von einer Simulations-Einheit generiert werden.

Wie eingangs erwähnt, betrifft die Erfindung unter anderem eine Schienenfahrzeugflotte.

Die erfindungsgemäße Schienenfahrzeugflotte umfasst n Schienenfahrzeuge, von denen jedes ein Zustandsbeeinflussungssystem zur Fahrzeugzustandsbeeinflussung, welches elektrische Energie erzeugen und/oder verbrauchen kann, sowie eine mittels eines Maschinen-Lernverfahrens trainierte Rechnereinheit aufweist, wobei n eine natürliche Zahl und größer als 1 ist. Bei der erfindungsgemäßen Schienenfahrzeugflotte ist für alle i von 1 bis n vorgesehen, dass die Rechnereinheit des i-ten Schienenfahrzeugs der n Schienenfahrzeuge dazu eingerichtet ist, im Betrieb der Schienenfahrzeugflotte unter Beachtung mindestens eines Sollkriteriums für das i-te Schienenfahrzeug sowie in Abhängigkeit von fahrzeug-, orts- und/oder streckenbezogenen Statusparametern eine auf das Zustandsbeeinflussungssystem des i-ten Schienenfahrzeugs anzuwendende Aktion auszuwählen, die bei Anwendung auf das Zustandsbeeinflussungssystem des i-ten Schienenfahrzeugs zur Optimierung einer elektrischen Gesamtenergiebilanz der Zustandsbeeinflussungssysteme der Schienenfahrzeugflotte beiträgt, wobei i eine natürliche Zahl ist.

Weiter oben im Zusammenhang mit dem erfindungsgemäßen Verfahren beschriebene Ausführungsformen, Ausführungsdetails und Vorteile können sich auch auf die erfindungsgemäße Schienenfahrzeugflotte beziehen.

Das erfindungsgemäße Verfahren ist vorzugsweise mithilfe der erfindungsgemäßen Schienenfahrzeugflotte ausführbar.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Schienenfahrzeugflotte kombinierbar. Ferner können Verfahrensmerkmale auch als Eigenschaft der entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit den Figuren näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale. Außerdem können dazu geeignete Merkmale des Ausführungsbeispiels auch explizit isoliert betrachtet und mit einem beliebigen der Ansprüche kombiniert werden.

Es zeigen:
- FIG 1: eine Schienenfahrzeugflotte, die mehrere Schienenfahrzeuge umfasst;
- FIG 2: eines der Schienenfahrzeuge der Schienenfahrzeugflotte aus FIG 1;
- FIG 3: eine schematische Darstellung eines künstlichen neuronalen Netzes eines der Schienenfahrzeuge;
- FIG 4: einen Verfahrensablauf eines Verfahrens zum Trainieren von Rechnereinheiten der Schienenfahrzeugflotte.

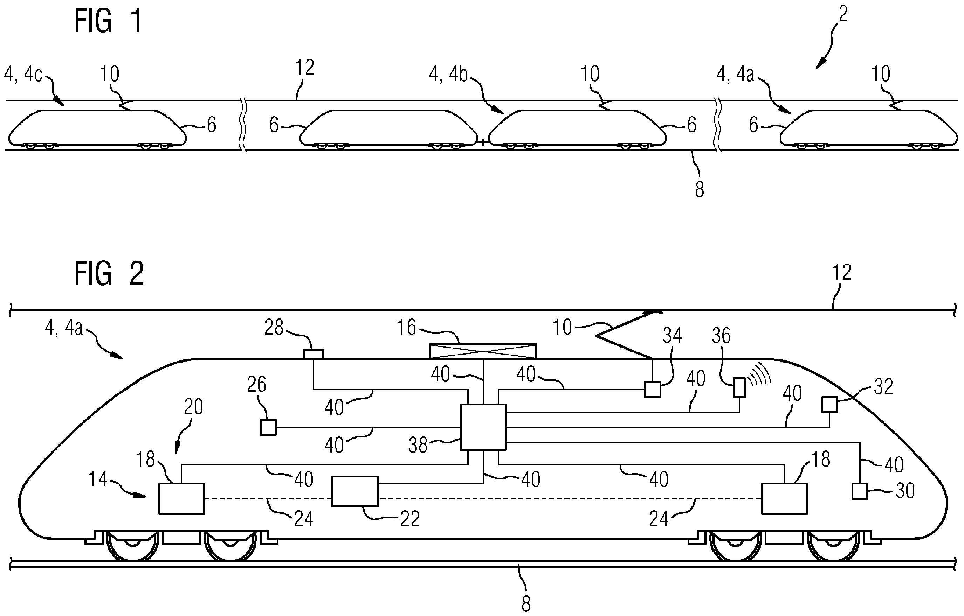

FIG 1 zeigt eine Schienenfahrzeugflotte 2, die mehrere Schienenfahrzeuge 4 umfasst. Genauer gesagt, umfasst die Schienenfahrzeugflotte 2 ein erstes Schienenfahrzeug 4a, ein zweites Schienenfahrzeug 4b sowie ein drittes Schienenfahrzeug 4c.

Das erste und das dritte Schienenfahrzeug 4a, 4c weisen jeweils genau einen Wagen 6 auf. Das zweite Schienenfahrzeug 4b hingegen weist zwei miteinander gekuppelte Wagen 6 auf.

Die Anzahl der Schienenfahrzeuge 4 der Schienenfahrzeugflotte 2 sowie deren jeweilige Anzahl von Wagen 6 sind im vorliegenden Ausführungsbeispiel willkürlich gewählt. Das heißt, prinzipiell kann die Schienenfahrzeugflotte 2 eine andere Anzahl von Schienenfahrzeugen 4 umfassen. Zudem können die Schienenfahrzeuge 4 der Schienenfahrzeugflotte 2 jeweils eine andere Anzahl von Wagen 6 aufweisen.

Im vorliegenden Ausführungsbeispiel sind die Schienenfahrzeuge 4 der Schienenfahrzeugflotte 2 auf demselben Schienenweg 8 unterwegs, wobei dies keine notwendige Voraussetzung für die Erfindung ist.

Die Schienenfahrzeuge 4 der Schienenfahrzeugflotte 2 weisen jeweils einen Stromabnehmer 10 auf, der mit einer als Oberleitung ausgebildeten Fahrleitung 12 in Kontakt ist. Jedes der Schienenfahrzeuge 4 kann - je nach Betriebszustand - mithilfe seines Stromabnehmers 10 elektrische Energie aus der Fahrleitung 12 beziehen bzw. elektrische Energie in die Fahrleitung 12 einspeisen.

FIG 2 zeigt exemplarisch das erste Schienenfahrzeug 4a der Schienenfahrzeugflotte 2.

Die anderen Schienenfahrzeuge 4b, 4c der Schienenfahrzeugflotte 2 sind mit den gleichen Vorrichtungen wie das erste Schienenfahrzeug 4a ausgestattet und die nachfolgenden Ausführungen gelten analog auch für die anderen Schienenfahrzeuge 4b, 4c der Schienenfahrzeugflotte 2.

Das erste Schienenfahrzeug 4a umfasst ein Zustandsbeeinflussungssystem 14 zur Fahrzeugzustandsbeeinflussung, welches mehrere Komponenten umfasst. Zu den Komponenten des Zustandsbeeinflussungssystems 14 gehören eine Klimaanalage 16 zur Klimatisierung eines Fahrzeuginnenraums sowie mehrere elektrische Traktionsmotoren 18. Die Traktionsmotoren 18 können (im Generatorbetrieb) als elektrische Bremsen eingesetzt werden und bilden Elemente eines Bremssystems 20 des ersten Schienenfahrzeugs 4a.

Eine weitere Komponente des Zustandsbeeinflussungssystems 14 ist ein Energiespeicher 22 zum Speichern elektrischer Energie. Die Traktionsmotoren 18 sind über Energieübertragungsleitungen 24 mit dem Energiespeicher 22 verbunden, sodass die Traktionsmotoren 18 - je nach Betriebszustand - elektrische Energie aus dem Energiespeicher 22 beziehen können bzw. den Energiespeicher mit elektrischer Energie laden können.

Darüber hinaus umfasst das erste Schienenfahrzeug 4a eine Mehrzahl von Vorrichtungen zum Erfassen von Statusparametern. Hierzu gehören unter anderem ein erster Temperatursensor 26 zum Messen einer Innenraumtemperatur des ersten Schienenfahrzeugs 4a, ein zweiter Temperatursensor 28 zum Messen der Außentemperatur sowie ein Geschwindigkeitssensor 30 zum Messen der Fahrgeschwindigkeit des ersten Schienenfahrzeugs 4a. Weitere Vorrichtungen zum Erfassen von Statusparametern sind eine Positionsermittlungsvorrichtung 32, wie zum Beispiel ein GPS-Empfänger, sowie ein Spannungsmessgerät 34 zum Messen der momentanen Fahrleitungsspannung am Ort des ersten Schienenfahrzeugs 4a.

Darüber hinaus umfasst das erste Schienenfahrzeug 4a eine Funkvorrichtung 36 zum Senden und Empfangen von Daten mittels Funkwellen. Mithilfe der Funkvorrichtung 36 kann das erste Schienenfahrzeug 4a Daten mit einer Leitstelle und/oder mit den anderen Schienenfahrzeugen 4b, 4c der Schienenfahrzeugflotte 2 austauschen. Zum Beispiel können die Schienenfahrzeuge 4 der Schienenfahrzeugflotte 2 über ihre Funkvorrichtungen Positionsdaten austauschen, anhand welcher die Abstände der Schienenfahrzeuge 4 zueinander ermittelt werden können.

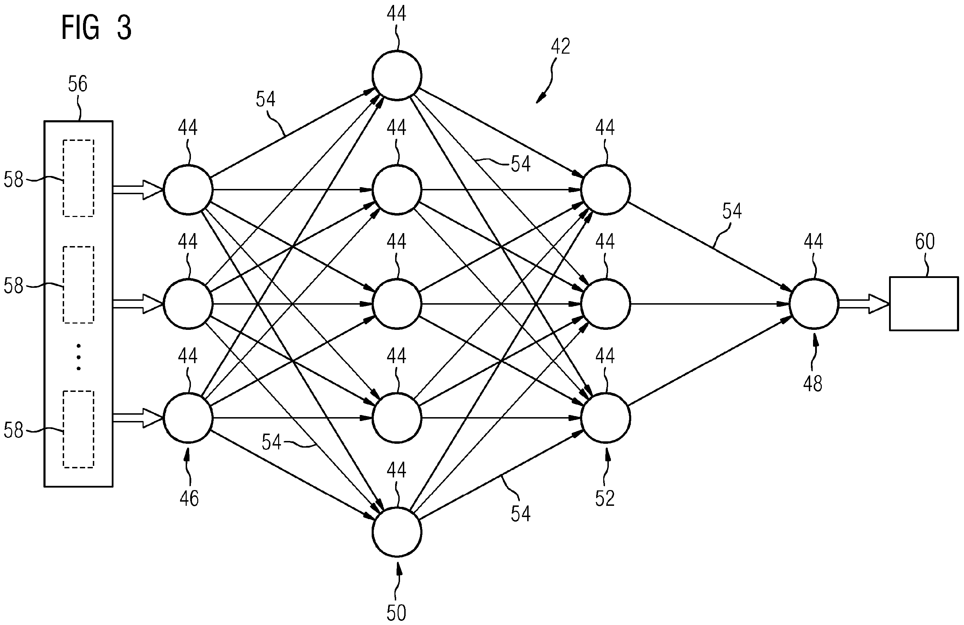

Weiter weist das erste Schienenfahrzeug 4a eine Rechnereinheit 38 auf, in deren Datenspeicher ein mittels eines Maschinen-Lernverfahrens trainiertes künstliches neuronales Netz (vgl. FIG 3) implementiert ist. Die Rechnereinheit 38 ist mit den zuvor erwähnten Vorrichtungen des ersten Schienenfahrzeugs 4a (also der Klimaanlage 16, den Traktionsmotoren 18, dem Energiespeicher 22, den Sensoren 26-30, der Positionsermittlungsvorrichtung 32, dem Spannungsmessgerät 34 und der Funkvorrichtung 36) über Signalleitungen 40 verbunden und ist dazu eingerichtet, besagte Vorrichtungen zu steuern.

Im Betrieb des ersten Schienenfahrzeugs 4a werden von dessen Vorrichtungen mehrere Statusparameter, wie zum Beispiel die Innenraumtemperatur des ersten Schienenfahrzeugs 4a, die Außenraumtemperatur, die Fahrgeschwindigkeit des ersten Schienenfahrzeugs 4a, die Position des ersten Schienenfahrzeugs 4a und die momentane Fahrleitungsspannung am Ort des ersten Schienenfahrzeugs 4a, erfasst und an die Rechnereinheit 38 des ersten Schienenfahrzeugs 4a übermittelt. Ferner empfängt das erste Schienenfahrzeug 4a über seine Funkvorrichtung 36 die Positionen der anderen Schienenfahrzeuge 4b, 4c der Schienenfahrzeugflotte 2 und leitet diese Statusparameter an seine Rechnereinheit 38 weiter. Darüber hinaus empfängt das erste Schienenfahrzeug 4a über seine Funkvorrichtung 36 von einer Leitstelle den Durchschnitts-/Normalwert der Fahrleitungsspannung am Ort des ersten Schienenfahrzeugs 4a sowie die durchschnittliche Spannungsschwankung der Fahrleitungsspannung am Ort des ersten Schienenfahrzeugs 4a und leitet auch diese Statusparameter an seine Rechnereinheit 38 weiter.

Von der Rechnereinheit 38 des ersten Schienenfahrzeugs 4a wird in Abhängigkeit der Statusparameter sowie unter Beachtung mehrerer vorgegebener Sollkriterien für das erste Schienenfahrzeug 4a eine auf das Zustandsbeeinflussungssystem 14 des ersten Schienenfahrzeugs 4a anzuwendende Aktion ausgewählt, die bei Anwendung auf dieses Zustandsbeeinflussungssystem 14 zur Optimierung einer elektrischen Gesamtenergiebilanz der Zustandsbeeinflussungssysteme 14 der Schienenfahrzeugflotte 2 beiträgt. Anschließend wird die ausgewählte Aktion von der Rechnereinheit 38 auf das Zustandsbeeinflussungssystem 14 des ersten Schienenfahrzeugs 4a angewendet.

Die Sollkriterien für das erste Schienenfahrzeug 4a können sich unter anderem auf eine vom ersten Schienenfahrzeug 4a einzuhaltenden Fahrplan, auf eine (von der Außentemperatur abhängige) einzuhaltende Fahrzeuginnenraumtemperatur, eine Obergrenze für die Fahrleitungsspannung am Ort des ersten Schienenfahrzeugs 4a, eine Untergrenze für die Fahrleitungsspannung am Ort des ersten Schienenfahrzeugs 4a, einen zulässigen Mindestabstand zu den anderen Schienenfahrzeugen 4b, 4c der Schienenfahrzeugflotte 2 und/oder eine maximal zulässige Fahrgeschwindigkeit beziehen.

Beispielweise können die Sollkriterien vorsehen, dass die Verspätung des ersten Schienenfahrzeugs 4a gegenüber dem einzuhaltenden Fahrplan eine vorgegebene Höchstdauer nicht überschreiten soll, die Fahrgeschwindigkeit des ersten Schienenfahrzeugs 4a eine maximal zulässige Fahrgeschwindigkeit nicht überschreiten soll, die Abweichung der Fahrzeuginnenraumtemperatur des ersten Schienenfahrzeugs 4a von der einzuhaltenden Fahrzeuginnenraumtemperatur einen vorgegebenen Maximalwert nicht überschreiten soll, der Abstand des ersten Schienenfahrzeugs 4a zu den anderen Schienenfahrzeugen 4b, 4c den zulässigen Mindestabstand nicht unterschreiten soll und/oder die Fahrleitungsspannung am Ort des ersten Schienenfahrzeugs 4a die besagte Ober- und Untergrenze nicht über-/unterschreiten soll.

Die von der Rechnereinheit 38 des ersten Schienenfahrzeugs 4a ausgewählte Aktion kann ein Einschalten einer oder mehrerer Komponenten des Zustandsbeeinflussungssystems 14 des ersten Schienenfahrzeugs 4a, ein Ausschalten einer oder mehrerer Komponenten dieses Zustandsbeeinflussungssystems 14, ein Verändern einer Stellgröße einer oder mehrerer Komponenten dieses Zustandsbeeinflussungssystems 14 und/oder ein Verändern eines Betriebsmodus einer oder mehrerer Komponenten dieses Zustandsbeeinflussungssystems 14 umfassen.

Durch Anwenden der ausgewählten Aktion auf das Zustandsbeeinflussungssystem 14 des ersten Schienenfahrzeugs 4a wird die elektrische Gesamtenergiebilanz aller Zustandsbeeinflussungssysteme 14 der Schienenfahrzeugflotte 2 optimiert und sichergestellt, dass die Sollkriterien für das jeweilige Schienenfahrzeug 4 eingehalten werden.

FIG 3 zeigt eine schematische Darstellung eines künstlichen neuronalen Netzes 42 einer der Rechnereinheiten 38 der Schienenfahrzeugflotte 2. Die künstlichen neuronalen Netze der anderen Rechnereinheiten 38 der Schienenfahrzeugflotte 2 können jeweils einen Aufbau wie das künstliche neuronale Netz 42 aus FIG 3 oder einen ähnlichen Aufbau aufweisen.

Das in FIG 3 dargestellte künstliche neuronale Netz 42 umfasst eine Vielzahl künstlicher Neuronen 44, die mehrere Schichten bilden. Im vorliegenden Fall bilden die Neuronen 44 eine Eingabeschicht 46, eine Ausgabeschicht 48 sowie - zwischen der Eingabeschicht 46 und der Ausgabeschicht 48 - eine erste Zwischenschicht 50 und eine zweite Zwischenschicht 52.

Bei dem künstlichen neuronalen Netz 42 aus FIG 3 umfassen die Eingabeschicht 46 und die zweite Zwischenschicht 52 drei Neuronen 44, während die erste Zwischenschicht 50 fünf Neuronen 44 umfasst und die Ausgabeschicht 48 ein Neuron 44 umfasst, wobei die Anzahl der Neuronen 44 der jeweiligen Schicht 46-52 lediglich exemplarisch gewählt wurde.

Die einzelnen Schichten 46-52 des künstlichen neuronalen Netzes 42 sind durch Neuronenverbindungen 54, die jeweils zwei der Neuronen 44 miteinander verbinden, miteinander verknüpft. Im vorliegenden Fall ist jedes Neuron 44 der Eingabeschicht 46 mit jedem Neuron 44 der ersten Zwischenschicht 52 verbunden. Weiter sind die Neuronen 44 der ersten Zwischenschicht 50 jeweils mit jedem Neuron 44 der zweiten Zwischenschicht 52 verbunden. Jedes Neuron 44 der zweiten Zwischenschicht 52 ist seinerseits mit dem Neuron 44 der Ausgabeschicht 48 verbunden.

Das künstliche neuronale Netz 42 ist im Datenspeicher einer der Rechnereinheiten 38 der Schienenfahrzeugflotte 2 implementiert. Im trainierten Zustand wird das künstliche neuronale Netz 42 dazu genutzt, eine Aktion für das Schienenfahrzeug 4, dem die Rechnereinheit 38 angehört, auszuwählen, welche Aktion dann auf das Zustandsbeeinflussungssystem 14 des besagten Schienenfahrzeugs 4 angewendet wird und zu einer Optimierung der elektrischen Gesamtenergiebilanz der Zustandsbeeinflussungssysteme 14 der Schienenfahrzeugflotte 2 beiträgt.

Zu diesem Zweck wird ein Datensatz 56, der mehrere Statusparameter 58 umfasst, an die Eingabeschicht 46 des künstlichen neuronalen Netzes 44 übermittelt. In Abhängigkeit der an die Eingabeschicht 46 übermittelten Statusparameter 58 sowie unter Beachtung mindestens eines vorgegebenen Sollkriteriums wählt das künstliche neuronale Netz 42 (beispielweise aus einer Liste mehrerer möglicher Aktionen) die anzuwendende Aktion 60 aus und gibt diese über seine Ausgabeschicht 48 aus.

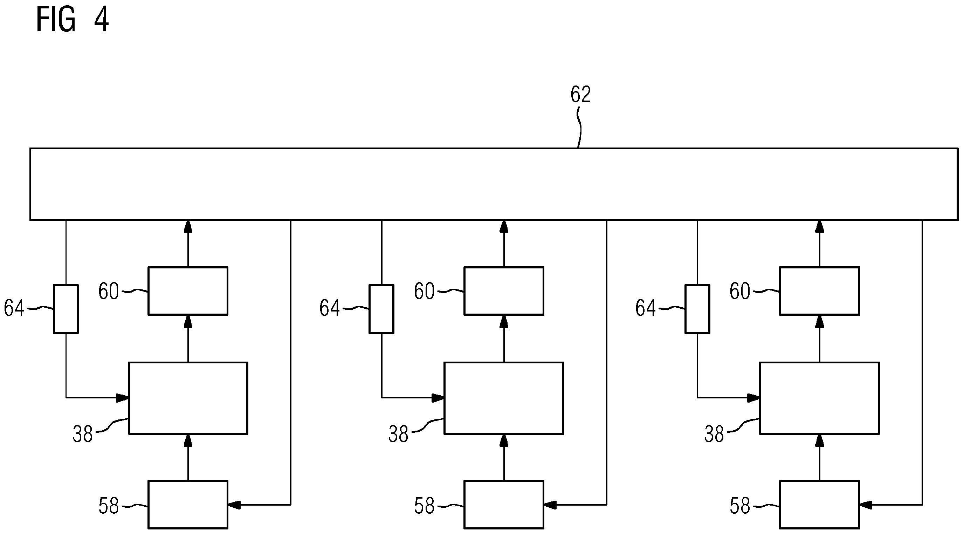

FIG 4 zeigt einen Verfahrensablauf eines Verfahrens zum Trainieren der Rechnereinheiten 38 der Schienenfahrzeugflotte 2.

Anhand von FIG 4 wird im Folgenden erläutert, wie die Rechnereinheit 38 des jeweiligen Schienenfahrzeugs 4 mittels eines überwachten Maschinen-Lernverfahrens (aus einem zunächst untrainierten Zustand heraus) dazu trainiert wird, eine Aktion auszuwählen, welche bei Anwendung auf das Zustandsbeeinflussungssystem 14 desselben Schienenfahrzeugs 4 zur Optimierung einer elektrischen Gesamtenergiebilanz der Zustandsbeeinflussungssysteme 14 der Schienenfahrzeugflotte 2 beiträgt.

Von einer Simulations-Einheit 62 wird für jede der Rechnereinheiten 38 ein Satz von Statusparametern 58 generiert und an die entsprechende Rechnereinheit 38 übermittelt. Die jeweilige Rechnereinheit 38 wählt in Abhängigkeit der von ihr empfangenen Statusparameter 58 sowie unter Beachtung mindestens eines vorgegebenen Sollkriteriums für das Schienenfahrzeug 4, dem die Rechnereinheit 38 angehört, eine Aktion aus, die auf das Zustandsbeeinflussungssystem 14 desselben Schienenfahrzeugs 4 anzuwenden ist.

Anhand der von allen Rechnereinheiten 38 ausgewählten Aktionen wird von der Simulations-Einheit 62 eine elektrische Gesamtenergiebilanz der Zustandsbeeinflussungssysteme 14 der Schienenfahrzeugflotte 2 berechnet, anhand welcher von der Simulations-Einheit 62 für jede der Rechnereinheiten 38 eine Belohnung 64 ermittelt, die an die jeweilige Rechnereinheit 38 übermittelt wird. Die erhaltene Belohnung 64 dient für die jeweilige Rechnereinheit 38 als Grundlage für die Bewertung, ob die von der Rechnereinheit 38 gewählte Aktion im Hinblick auf das Ziel, die elektrische Gesamtenergiebilanz der Zustandsbeeinflussungssysteme 14 der Schienenfahrzeugflotte 2 zu optimieren, sinnvoll war.

Der beschriebene Prozess stellt einen einzelnen Trainingsdurchlauf des Trainings der Rechnereinheiten 38 dar, wobei das Training der Rechnereinheiten 38 mehrere aufeinanderfolgende Trainingsdurchläufe dieser Art umfasst.

Obwohl die Erfindung im Detail durch das bevorzugte Ausführungsbeispiel näher illustriert und beschrieben wurde, so ist die Erfindung nicht durch das offenbarte Beispiel eingeschränkt. Der

Schutzumfang der Erfindung ist durch die unabhängigen Ansprüche definiert.

## Patentansprüche

1. Verfahren zum energieoptimierten Betreiben einer Schienenfahrzeugflotte (2), bei dem die Schienenfahrzeugflotte (2) n Schienenfahrzeuge (4, 4a-4c) umfasst, von denen jedes ein Zustandsbeeinflussungssystem (14) zur Fahrzeugzustandsbeeinflussung, welches elektrische Energie erzeugen und/oder verbrauchen kann, sowie eine Rechnereinheit (38) aufweist, und für alle i von 1 bis n im Betrieb der Schienenfahrzeugflotte (2)
- von der Rechnereinheit (38) des i-ten Schienenfahrzeugs der n Schienenfahrzeuge (4, 4a-4c) unter Beachtung mindestens eines Sollkriteriums für das i-te Schienenfahrzeug sowie in Abhängigkeit von fahrzeug-, orts- und/oder streckenbezogenen Statusparametern (58) des i-ten Schienenfahrzeugs eine auf das Zustandsbeeinflussungssystem (14) des i-ten Schienenfahrzeugs anzuwendende Aktion (60) ausgewählt wird, die bei Anwendung auf das Zustandsbeeinflussungssystem (14) des i-ten Schienenfahrzeugs zur Optimierung einer elektrischen Gesamtenergiebilanz der Zustandsbeeinflussungssysteme der Schienenfahrzeugflotte (2) beiträgt, und
- die ausgewählte Aktion (60) auf das Zustandsbeeinflussungssystem (14) des i-ten Schienenfahrzeugs angewendet wird,
wobei i und n natürliche Zahlen sind und n größer als 1 ist, **dadurch gekennzeichnet, dass**
die Rechnereinheiten (38) der n Schienenfahrzeuge (4, 4a-4c) jeweils ein mittels eines Maschinen-Lernverfahrens trainiertes künstliches neuronales Netz (42) umfassen, wobei das Auswählen der Aktion (60) durch die Rechnereinheit (38) des i-ten Schienenfahrzeugs mithilfe ihres künstlichen neuronalen Netzes (42) erfolgt, wobei die Rechnereinheit (38) des i-ten Schienenfahrzeugs aus einem zunächst untrainierten Zustand heraus mittels des besagten Maschinen-Lernverfahrens dazu trainiert wird, im Betrieb der Schienenfahrzeugflotte (2) unter Beachtung mindestens eines Sollkriteriums für das i-te Schienenfahrzeug sowie in Abhängigkeit von fahrzeug-, orts- und/oder streckenbezogenen Statusparametern (58) eine auf das Zustandsbeeinflussungssystem (14) des i-ten Schienenfahrzeugs anzuwendende Aktion (60) auszuwählen, die bei Anwendung auf das Zustandsbeeinflussungssystem (14) des i-ten Schienenfahrzeugs zur Optimierung der elektrischen Gesamtenergiebilanz der Zustandsbeeinflussungssysteme (14) der Schienenfahrzeugflotte (2) beiträgt, wobei die Aktion (60) von der Rechnereinheit (38) des i-ten Schienenfahrzeugs unter Beachtung mehrerer Sollkriterien für das i-te Schienenfahrzeug ausgewählt wird, wobei sich zumindest ein Teil der Sollkriterien auf eine Fahrzeuginnenraumtemperatur des i-ten Schienenfahrzeugs, eine Temperatur einer Fahrzeugkomponente des i-ten Schienenfahrzeugs, eine Obergrenze für eine Fahrleitungsspannung am Ort des i-ten Schienenfahrzeugs, eine Untergrenze für eine Fahrleitungsspannung am Ort des i-ten Schienenfahrzeugs, einen zulässigen Mindestabstand zu einem vorausfahren Schienenfahrzeug und/oder einen zulässigen Mindestabstand zu einem nachfolgenden Schienenfahrzeug bezieht.

2. Verfahren nach Anspruch 1,
**dadurch gekennzeichnet, dass**
die von der Rechnereinheit (38) des i-ten Schienenfahrzeugs ausgewählte Aktion (60) ein Einschalten einer oder mehrerer Komponenten des Zustandsbeeinflussungssystems (14) des i-ten Schienenfahrzeugs, ein Ausschalten einer oder mehrerer Komponenten dieses Zustandsbeeinflussungssystems (14), ein Verändern einer Stellgröße einer oder mehrerer Komponenten dieses Zustandsbeeinflussungssystems (14) und/oder ein Verändern eines Betriebsmodus einer oder mehrerer Komponenten dieses Zustandsbeeinflussungssystems (14) umfasst.

3. Verfahren nach Anspruch 1 oder 2,
**dadurch gekennzeichnet, dass**
sich das mindestens eine Sollkriterium für das i-te Schienenfahrzeug auf einen vom i-ten Schienenfahrzeug einzuhaltenden Fahrplan bezieht.

4. Verfahren nach einem der voranstehenden Ansprüche,
**dadurch gekennzeichnet, dass**
die Statusparameter (58), in Abhängigkeit derer die Aktion (60) von der Rechnereinheit (38) des i-ten Schienenfahrzeugs ausgewählt wird, eine momentane Fahrleitungsspannung am Ort des i-ten Schienenfahrzeugs und/oder einen oder mehrere statistische Fahrleitungsspannungswerte am Ort des i-ten Schienenfahrzeugs umfassen.

5. Verfahren nach einem der voranstehenden Ansprüche,
**dadurch gekennzeichnet, dass**
die Statusparameter (58), in Abhängigkeit derer die Aktion (60) von der Rechnereinheit (38) des i-ten Schienenfahrzeugs ausgewählt wird, eine Position des i-ten Schienenfahrzeugs, eine Fahrgeschwindigkeit des
i-ten Schienenfahrzeugs, einen Bremssystemzustand des i-ten Schienenfahrzeugs, mindestens einen Wetterparameter am Ort des i-ten Schienenfahrzeugs, einen Abstand zu einem vorausfahrenden Schienenfahrzeug, einen Abstand zu einem nachfolgenden Schienenfahrzeug, mindestens einen Infrastrukturparameter und/oder mindestens einen Fahrstreckenparameter umfassen.

6. Verfahren nach einem der voranstehenden Ansprüche,
**dadurch gekennzeichnet, dass**
das Zustandsbeeinflussungssystem (14) des jeweiligen Schienenfahrzeugs (4, 4a-4c) mindestens einen elektrischen Traktionsmotor (18) aufweist und die von der Rechnereinheit (38) des i-ten Schienenfahrzeugs ausgewählte Aktion (60) zumindest auf den Traktionsmotor (18) des Zustandsbeeinflussungssystems (14) des i-ten Schienenfahrzeugs angewendet wird, wobei eine Fahrgeschwindigkeit des
i-ten Schienenfahrzeugs verändert wird.

7. Verfahren nach einem der voranstehenden Ansprüche,
**dadurch gekennzeichnet, dass**
das Zustandsbeeinflussungssystem (14) des jeweiligen Schienenfahrzeugs (4, 4a-4c) mindestens ein Bremssystem (20) aufweist und die von der Rechnereinheit des i-ten Schienenfahrzeugs ausgewählte Aktion (60) zumindest auf das Bremssystem (20) des i-ten Schienenfahrzeugs angewendet wird, wobei eine Fahrgeschwindigkeit des i-ten Schienenfahrzeugs verringert wird.

8. Verfahren nach einem der voranstehenden Ansprüche,
**dadurch gekennzeichnet, dass**
das Zustandsbeeinflussungssystem (14) des jeweiligen Schienenfahrzeugs (4, 4a-4c) mindestens einen Energiespeicher (22) zum Bereitstellen elektrischer Energie aufweist und die von der Rechnereinheit (38) des
i-ten Schienenfahrzeugs ausgewählte Aktion (60) zumindest auf den Energiespeicher (22) des Zustandsbeeinflussungssystems (14) des i-ten Schienenfahrzeugs angewendet wird, wobei der Energiespeicher (22) des i-ten Schienenfahrzeugs geladen oder entladen wird.

9. Verfahren nach einem der voranstehenden Ansprüche,
**dadurch gekennzeichnet, dass**
die Rechnereinheiten (38) der n Schienenfahrzeuge (4, 4a-4c) jeweils ein mittels eines Maschinen-Lernverfahrens trainiertes tiefes künstliches neuronales Netz umfassen.

10. Verfahren nach einem der voranstehenden Ansprüche,
**dadurch gekennzeichnet, dass**
das Maschinen-Lernverfahren, mittels welchem die jeweilige Rechnereinheit (38) trainiert wird, ein überwachtes Maschinen-Lernverfahren ist.

11. Verfahren nach einem der voranstehenden Ansprüche,
**dadurch gekennzeichnet, dass**
das Trainieren mehrere aufeinanderfolgende Trainingsdurchläufe umfasst, wobei in jedem Trainingsdurchlauf an die Rechnereinheit (38) des i-ten Schienenfahrzeus ein Satz von Statusparametern (58) übermittelt wird und von der Rechnereinheit (38) des i-ten Schienenfahrzeugs in Abhängigkeit der von ihr empfangenen Statusparameter (58) sowie unter Beachtung mindestens eines Sollkriteriums für das i-te Schienenfahrzeug eine Aktion (60) ausgewählt wird, die auf das Zustandsbeeinflussungssystem (14) des i-ten Schienenfahrzeugs anzuwenden ist, wobei in jedem Trainingsdurchlauf anhand der von den Rechnereinheiten (38) der n Schienenfahrzeuge (4, 4a-4c) bei dem jeweiligen Trainingsdurchlauf ausgewählten Aktionen (60) eine elektrische Gesamtenergiebilanz der Zustandsbeeinflussungssysteme (14) der Schienenfahrzeugflotte (2) berechnet wird und anhand dieser berechneten Gesamtenergiebilanz für jede der Rechnereinheiten (38) eine Belohnung ermittelt wird.

12. Verfahren nach Anspruch 11,
**dadurch gekennzeichnet, dass**
der Satz von Statusparametern (58), der bei dem jeweiligen Trainingsdurchlauf an die Rechnereinheit (38) des i-ten Schienenfahrzeugs übermittelt wird, von einer Simulations-Einheit (62) generiert wird.

13. Schienenfahrzeugflotte (2),
umfassend n Schienenfahrzeuge (4, 4a-4c), von denen jedes ein Zustandsbeeinflussungssystem (14) zur Fahrzeugzustandsbeeinflussung, welches elektrische Energie erzeugen und/oder verbrauchen kann, sowie eine Rechnereinheit (38) aufweist, wobei für alle i von 1 bis n vorgesehen ist, dass die Rechnereinheit (38) des i-ten Schienenfahrzeugs der n Schienenfahrzeuge (4, 4a-4c) dazu eingerichtet ist, im Betrieb der Schienenfahrzeugflotte (2) unter Beachtung mindestens eines Sollkriteriums für das i-te Schienenfahrzeug sowie in Abhängigkeit von fahrzeug-, orts- und/oder streckenbezogenen Statusparametern (58) eine auf das Zustandsbeeinflussungssystem (14) des i-ten Schienenfahrzeugs anzuwendende Aktion (60) auszuwählen, die bei Anwendung auf das Zustandsbeeinflussungssystem des i-ten Schienenfahrzeugs zur Optimierung einer elektrischen Gesamtenergiebilanz der Zustandsbeeinflussungssysteme (14) der Schienenfahrzeugflotte (2) beiträgt, wobei i und n natürliche Zahlen sind und n größer als 1 ist, **dadurch gekennzeichnet, dass** die Rechnereinheiten (38) der n Schienenfahrzeuge (4, 4a-4c) jeweils ein mittels eines Maschinen-Lernverfahrens trainiertes künstliches neuronales Netz (42) umfassen, wobei das Auswählen der Aktion (60) durch die Rechnereinheit (38) des i-ten Schienenfahrzeugs mithilfe ihres künstlichen neuronalen Netzes (42) erfolgt, wobei die Rechnereinheit (38) des i-ten Schienenfahrzeugs aus einem zunächst untrainierten Zustand heraus mittels des besagten Maschinen-Lernverfahrens dazu trainiert ist, im Betrieb der Schienenfahrzeugflotte (2) unter Beachtung mindestens eines Sollkriteriums für das i-te Schienenfahrzeug sowie in Abhängigkeit von fahrzeug-, orts- und/oder streckenbezogenen Statusparametern (58) eine auf das Zustandsbeeinflussungssystem (14) des i-ten Schienenfahrzeugs anzuwendende Aktion (60) auszuwählen, die bei Anwendung auf das Zustandsbeeinflussungssystem (14) des i-ten Schienenfahrzeugs zur Optimierung der elektrischen Gesamtenergiebilanz der Zustandsbeeinflussungssysteme (14) der Schienenfahrzeugflotte (2) beiträgt, wobei die Aktion (60) von der Rechnereinheit (38) des i-ten Schienenfahrzeugs unter Beachtung mehrerer Sollkriterien für das i-te Schienenfahrzeug ausgewählt wird, wobei sich zumindest ein Teil der Sollkriterien auf eine Fahrzeuginnenraumtemperatur des i-ten Schienenfahrzeugs, eine Temperatur einer Fahrzeugkomponente des i-ten Schienenfahrzeugs, eine Obergrenze für eine Fahrleitungsspannung am Ort des i-ten Schienenfahrzeugs, eine Untergrenze für eine Fahrleitungsspannung am Ort des i-ten Schienenfahrzeugs, einen zulässigen Mindestabstand zu einem vorausfahren Schienenfahrzeug und/oder einen zulässigen Mindestabstand zu einem nachfolgenden Schienenfahrzeug bezieht.

## Claims

1. Method for the energy-optimized operation of a rail vehicle fleet (2), wherein the rail vehicle fleet (2) comprises n rail vehicles (4, 4a-4c), each of which comprises a state influencing system (14) for vehicle state influencing, which can generate and/or consume electrical energy, and also a computer unit (38), and, for all i from 1 to n during operation of the rail vehicle fleet (2),
- while taking into account at least one target criterion for the i-th rail vehicle and depending on vehicle-related, location-related and/or track-related state parameters (58) of the i-th rail vehicle, the computer unit (38) of the i-th rail vehicle of the n rail vehicles (4, 4a-4c) selects an action (60) to be applied to the state influencing system (14) of the i-th rail vehicle, which action contributes to the optimization of a total electrical energy balance of the state influencing systems of the rail vehicle fleet (2) when applied to the state influencing system (14) of the i-th rail vehicle, and
- the selected action (60) is applied to the state influencing system (14) of the i-th rail vehicle, wherein i and n are natural numbers and n is greater than 1, **characterized in that** the computer units (38) of the n rail vehicles (4, 4a-4c) each comprise an artificial neural network (42) trained by a machine learning method, wherein the selection of the action (60) is carried out by the computer unit (38) of the i-th rail vehicle using its artificial neural network (42), wherein the computer unit (38) of the i-th rail vehicle is trained from an initially untrained state by means of said machine learning method to select an action (60) to be applied to the state influencing system (14) of the i-th rail vehicle during operation of the rail vehicle fleet (2) taking into account at least one target criterion for the i-th rail vehicle and depending on the vehicle-related, location-related and/or track-related state parameters (58), which action contributes to the optimization of the overall electrical energy balance of the state influencing system (14) of the rail vehicle fleet (2) when applied to the state influencing systems (14) of the i-th rail vehicle, wherein the action (60) is selected by the computer unit (38) of the i-th rail vehicle taking into account multiple target criteria for the i-th rail vehicle, wherein at least some of the target criteria relate to a vehicle interior temperature of the i-th rail vehicle, a temperature of a vehicle component of the i-th rail vehicle, an upper limit for a contact line voltage at the location of the i-th rail vehicle, a lower limit for a contact line voltage at the location of the i-th rail vehicle, a permissible minimum distance from a rail vehicle ahead and/or a permissible minimum distance from a rail vehicle behind.

2. Method according to Claim 1,
**characterized in that**
the action (60) selected by the computer unit (38) of the i-th rail vehicle includes switching on one or more components of the state influencing system (14) of the i-th rail vehicle, switching off one or more components of this state influencing system (14), changing a control variable of one or more components of this state influencing system (14) and/or changing an operating mode of one or more components of this state influencing system (14).

3. Method according to Claim 1 or 2,
**characterized in that**
the at least one target criterion for the i-th rail vehicle relates to a timetable to be complied with by the i-th rail vehicle.

4. Method according to one of the preceding claims,
**characterized in that**
the state parameters (58), depending on which the action (60) is selected by the computer unit (38) of the i-th rail vehicle, include a current contact line voltage at the location of the i-th rail vehicle and/or one or more statistical contact line voltage values at the location of the i-th rail vehicle.

5. Method according to one of the preceding claims,
**characterized in that**
the state parameters (58), depending on which the action (60) is selected by the computer unit (38) of the i-th rail vehicle, include a position of the i-th rail vehicle, a driving speed of the
i-th rail vehicle, a braking system state of the i-th rail vehicle, at least one weather parameter at the location of the i-th rail vehicle, a distance from a rail vehicle ahead, a distance from a rail vehicle behind, at least one infrastructure parameter and/or at least one route parameter.

6. Method according to one of the preceding claims,
**characterized in that**
the state influencing system (14) of the respective rail vehicle (4, 4a-4c) comprises at least one electric traction motor (18) and the action (60) selected by the computer unit (38) of the i-th rail vehicle is applied at least to the traction motor (18) of the state influencing system (14) of the i-th rail vehicle, wherein a driving speed of the
i-th rail vehicle is changed.

7. Method according to one of the preceding claims,
**characterized in that**
the state influencing system (14) of the respective rail vehicle (4, 4a-4c) comprises at least one brake system (20) and the action (60) selected by the computer unit of the i-th rail vehicle is applied at least to the brake system (20) of the i-th rail vehicle, wherein a driving speed of the i-th rail vehicle is changed.

8. Method according to one of the preceding claims,
**characterized in that**
the state influencing system (14) of the respective rail vehicle (4, 4a-4c) comprises at least one energy store (22) for providing electrical energy and the action (60) selected by the computer unit (38) of the
i-th rail vehicle is applied at least to the energy store (22) of the state influencing system (14) of the i-th rail vehicle, wherein the energy store (22) of the i-th rail vehicle is charged or discharged.

9. Method according to one of the preceding claims,
**characterized in that**
the computer units (38) of the n rail vehicles (4, 4a-4c) each comprise a deep artificial neural network trained by a machine learning method.

10. Method according to one of the preceding claims,
**characterized in that**
the machine learning method by means of which the respective computer unit (38) is trained is a supervised machine learning method.

11. Method according to one of the preceding claims,
**characterized in that**
the training includes multiple consecutive training runs, wherein in each training run a set of state parameters (58) is transmitted to the computer unit (38) of the i-th rail vehicle and an action (60) which is to be applied to the state influencing system (14) of the i-th rail vehicle is selected by the computer unit (38) of the i-th rail vehicle depending on the state parameters (58) received by it and taking into account at least one target criterion for the i-th rail vehicle, wherein in each training run a total electrical energy balance of the state influencing system (14) of the rail vehicle fleet (2) is calculated based on the actions (60) selected by the computer units (38) of the n rail vehicles (4, 4a-4c) during the respective training run and a reward is determined for each of the computer units (38) on the basis of this calculated total energy balance.

12. Method according to Claim 11,
**characterized in that**
the set of state parameters (58) that is transmitted to the computer unit (38) of the i-th rail vehicle for the respective training run is generated by a simulation unit (62).

13. Rail vehicle fleet (2),
comprising n rail vehicles (4, 4a-4c), each of which comprises a state influencing system (14) for vehicle state influencing, which can generate and/or consume electrical energy, and also a computer unit (38), wherein, for all i from 1 to n, provision is made for the computer unit (38) of the i-th rail vehicle of the n rail vehicles (4, 4a-4c) to be set up, during operation of the rail vehicle fleet (2), while taking into account at least one target criterion for the i-th rail vehicle and depending on vehicle-related, location-related and/or track-related state parameters (58), to select an action (60) to be applied to the state influencing system (14) of the i-th rail vehicle, which action contributes to the optimization of a total electrical energy balance of the state influencing systems (14) of the rail vehicle fleet (2) when applied to the state influencing system of the i-th rail vehicle, wherein i and n are natural numbers and n is greater than 1, **characterized in that** the computer units (38) of the n rail vehicles (4, 4a-4c) each comprise an artificial neural network (42) trained by a machine learning method, wherein the selection of the action (60) is carried out by the computer unit (38) of the i-th rail vehicle using its artificial neural network (42), wherein the computer unit (38) of the i-th rail vehicle is trained from an initially untrained state by means of said machine learning method to select an action (60) to be applied to the state influencing system (14) of the i-th rail vehicle during operation of the rail vehicle fleet (2) taking into account at least one target criterion for the i-th rail vehicle and depending on vehicle-related, location-related and/or track-related state parameters (58), which action contributes to the optimization of the overall electrical energy balance of the state influencing systems (14) of the rail vehicle fleet (2) when applied to the state influencing system (14) of the i-th rail vehicle, wherein the action (60) is selected by the computer unit (38) of the i-th rail vehicle taking into account multiple target criteria for the i-th rail vehicle, wherein at least some of the target criteria relate to a vehicle interior temperature of the i-th rail vehicle, a temperature of a vehicle component of the i-th rail vehicle, an upper limit for a contact line voltage at the location of the i-th rail vehicle, a lower limit for a contact line voltage at the location of the i-th rail vehicle, a permissible minimum distance from a rail vehicle ahead and/or a permissible minimum distance from a rail vehicle behind.

## Revendications

1. Procédé pour faire fonctionner une flotte (2) de véhicules ferroviaires d'une manière optimisée en énergie, dans lequel la flotte (2) de véhicules ferroviaires comprend n véhicules (4, 4a-4c) ferroviaires, dont chacun a un système (14) d'influence de l'état pour influencer l'état du véhicule, qui peut produire et/ou consommer de l'énergie électrique, ainsi qu'une unité (38) informatique, et pour tous les i de 1 à n en fonctionnement de la flotte (2) de véhicules ferroviaires
- on sélectionne, par l'unité (38) informatique du ième véhicule ferroviaire des n véhicules (4, 4a-4c) ferroviaires, en prenant en considération un critère de consigne pour le ième véhicule ferroviaire, ainsi qu'en fonction de paramètres (58) de statut, se rapportant au véhicule, à la localisation et/ou à la voie, du ième véhicule ferroviaire, une action (60) à appliquer au système (14) d'influence de l'état du ième véhicule ferroviaire, qui, lors de l'application au système (14) d'influence de l'état du ième véhicule ferroviaire, contribue à l'optimisation d'un bilan d'énergie électrique d'ensemble des systèmes d'influence de l'état de la flotte (2) de véhicules ferroviaires, et
- on applique l'action (60) sélectionnée au système (14) d'influence de l'état du ième véhicule ferroviaire,
dans lequel i et n sont des nombres naturels et n est plus grand que 1,
**caractérisé en ce que**
les unités (38) informatiques des n véhicules (4, 4a-4c) ferroviaires comprennent chacune un réseau (42) neuronal artificiel ayant subi un apprentissage au moyen d'un procédé d'enseignement automatique, dans lequel la sélection de l'action (60), par l'unité (38) informatique du ième véhicule ferroviaire, s'effectue à l'aide de son réseau (42) neuronal artificiel, dans lequel on fait l'apprentissage, au moyen dudit procédé d'enseignement automatique, de l'unité (38) informatique du ième véhicule ferroviaire, à partir d'un état n'ayant d'abord pas subi d'apprentissage, en fonctionnement de la flotte (2) de véhicules ferroviaires en prenant en considération au moins un critère de consigne pour le ième véhicule ferroviaire, ainsi qu'en fonction de paramètres (58) de statut se rapportant au véhicule, à la localisation et/ou à la voie, on sélectionne une action (60) à appliquer au système (14) d'influence de l'état du ième véhicule ferroviaire, qui, lors de l'application au système (14) d'influence de l'état du ième véhicule ferroviaire, contribue à l'optimisation du bilan d'énergie électrique d'ensemble des systèmes (14) d'influence de l'état de la flotte (2) de véhicules ferroviaires, dans lequel on sélectionne l'action (60), par l'unité (38) informatique du ième véhicule ferroviaire, en prenant en considération plusieurs critères de consigne pour le ième véhicule ferroviaire, dans lequel au moins une partie des critères de consigne se rapporte à une température de l'espace intérieur du ième véhicule ferroviaire, à une température d'un composant du ième véhicule ferroviaire, à une limite supérieure d'une tension de caténaire à l'emplacement du ième véhicule ferroviaire, à une limite inférieure d'une tension de caténaire à l'emplacement du ième véhicule ferroviaire, à une distance minimum admissible par rapport à un véhicule ferroviaire précédent et/ou à une distance minimum admissible par rapport à un véhicule ferroviaire suivant.

2. Procédé suivant la revendication 1,
**caractérisé en ce que**
l'action (60), sélectionnée par l'unité (38) informatique du ième véhicule ferroviaire, comprend une mise en circuit d'un ou de plusieurs composants du système (14) d'influence de l'état du ième véhicule ferroviaire, une mise hors circuit d'un ou de plusieurs composants de ce système (14) d'influence de l'état, une modification d'une grandeur de réglage d'un ou de plusieurs composants de ce système (14) d'influence de l'état et/ou une modification d'un mode de fonctionnement d'un ou de plusieurs composants de ce système (14) d'influence de l'état.

3. Procédé suivant la revendication 1 ou 2,
**caractérisé en ce que**
le au moins un critère de consigne pour le ième véhicule ferroviaire se rapporte à un horaire à respecter par le ième véhicule ferroviaire.

4. Procédé suivant l'une des revendications précédentes,
**caractérisé en ce que**
les paramètres (58) de statut, en fonction desquels on sélectionne l'action (60) par l'unité (38) informatique du ième véhicule ferroviaire, comprennent une tension instantanée de caténaire à l'emplacement du ième véhicule ferroviaire et/ou une ou plusieurs valeurs de tension de caténaire statiques à l'emplacement du ième véhicule ferroviaire.

5. Procédé suivant l'une des revendications précédentes,
**caractérisé en ce que**
les paramètres (58) de statut, en fonction desquels on sélectionne l'action (60) par l'unité (38) du ième véhicule ferroviaire, comprennent une position du ième véhicule ferroviaire, une vitesse de circulation du ième véhicule ferroviaire, un état du système de frein du ième véhicule ferroviaire, au moins un paramètre météorologique à l'emplacement du ième véhicule ferroviaire, une distance à un véhicule ferroviaire précédent, une distance à véhicule ferroviaire suivant, au moins un paramètre d'infrastructure et/ou au moins un paramètre de voie de circulation.

6. Procédé suivant l'une des revendications précédentes,
**caractérisé en ce que**
le système (14) d'influence de l'état du véhicule (4, 4a-4c) ferroviaire respectif a au moins un moteur (18) de traction électrique et on applique l'action (60) sélectionnée par l'unité (38) informatique du ième véhicule ferroviaire au moins au moteur (18) de traction du système (14) d'influence de l'état du ième véhicule ferroviaire, une vitesse de circulation du ième véhicule ferroviaire étant modifiée.

7. Procédé suivant l'une des revendications précédentes,
**caractérisé en ce que**
le système (14) d'influence de l'état du véhicule (4, 4a-4c) ferroviaire respectif a au moins un système (20) de frein et on applique l'action (60) sélectionnée par l'unité informatique du ième véhicule ferroviaire au moins au système (20) de frein du ième véhicule ferroviaire, une vitesse de circulation du ième véhicule ferroviaire étant diminuée.

8. Procédé suivant l'une des revendications précédentes,
**caractérisé en ce que**
le système (14) d'influence de l'état du véhicule (4, 4a-4c) ferroviaire respectif a au moins un accumulateur (22) d'énergie pour disposer d'énergie électrique et on applique l'action (60) sélectionnée par l'unité (38) informatique du ième véhicule ferroviaire au moins à l'accumulateur (22) d'énergie du système (14) d'influence de l'état du ième véhicule ferroviaire, l'accumulateur (22) d'énergie du ième véhicule ferroviaire étant chargé ou déchargé.

9. Procédé suivant l'une des revendications précédentes,
**caractérisé en ce que**
les unités (38) informatiques des n véhicules (4, 4a-4c) ferroviaires comprennent chacune un réseau neuronal artificiel profond ayant subi un apprentissage au moyen d'un procédé d'enseignement automatique.

10. Procédé suivant l'une des revendications précédentes,
**caractérisé en ce que**
le procédé d'enseignement automatique, au moyen duquel on fait subir un apprentissage à l'unité (38) informatique respective, est un procédé d'enseignement automatique contrôlé.

11. Procédé suivant l'une des revendications précédentes,
**caractérisé en ce que**
l'apprentissage comprend plusieurs passes d'apprentissage successives, dans lequel, dans chaque passe d'apprentissage, on transmet à l'unité (38) informatique du ième véhicule ferroviaire un ensemble de paramètres (58) de statut et on sélectionne, par l'unité (38) informatique du ième véhicule ferroviaire en fonction des paramètres (58) de statut par lui reçus, ainsi qu'en prenant en considération au moins un critère de consigne pour le ième véhicule ferroviaire, une action (60) que l'on applique au système (14) d'influence de l'état du ième véhicule ferroviaire, dans lequel, dans chaque passe d'apprentissage, on calcule, à l'aide des actions (60) sélectionnées par les unités (38) informatiques des n véhicules (4, 4a-4c) ferroviaires lors de la passe d'apprentissage respective, un bilan d'énergie électrique d'ensemble des systèmes (14) d'influence de l'état de la flotte (2) de véhicules ferroviaires et on détermine une rémunération pour chacune des unités (38) informatiques à l'aide de ce calcul de bilan d'énergie d'ensemble.

12. Procédé suivant la revendication 11,
**caractérisé en ce que**
l'on crée, par une unité (62) de simulation, l'ensemble de paramètres (58) de statut que l'on transmet lors de la passe d'apprentissage respective à l'unité (38) informatique du ième véhicule ferroviaire.

13. Flotte (2) de véhicules ferroviaire,
comprenant n véhicules (4, 4a-4c) ferroviaires, dont chacun a un système (14) d'influence de l'état pour influencer l'état du véhicule, qui peut produire et/ou consommer de l'énergie électrique, ainsi qu'une unité (38) informatique, dans laquelle, pour tous les i de 1 à n, il est prévu que l'unité (38) informatique du ième véhicule ferroviaire des n véhicules (4, 4a-4c) ferroviaires est agencée pour sélectionner, en fonctionnement de la flotte (2) de véhicules ferroviaires en prenant en considération au moins un critère de consigne pour ième véhicule ferroviaire, ainsi qu'en fonction de paramètres (58) de statut se rapportant au véhicule ou à la localisation et/ou à la voie, une action (60) à appliquer au système (14) d'influence de l'état du ième véhicule ferroviaire, qui, lors de l'application au système d'influence, contribue à l'optimisation d'un bilan électrique d'ensemble des systèmes (14) d'influence de l'état de flotte (2) de véhicules ferroviaires, i et n étant des nombres naturels et n étant plus grand que 1, **caractérisée en ce que** les unités (38) informatiques de n véhicules (4, 4a-4c) ferroviaires comprennent respectivement un réseau (42) neuronal artificiel ayant subi un apprentissage au moyen d'un procédé d'enseignement automatique, dans laquelle la sélection de l'action (60) par l'unité (38) informatique du ième véhicule ferroviaire s'effectue à l'aide de son réseau (42) neuronal artificiel, dans laquelle l'unité (38) informatique du ième véhicule ferroviaire subit un apprentissage au moyen dudit procédé d'enseignement automatique, à partir d'un état n'ayant pas subi d'abord d'apprentissage, en fonctionnement de la flotte (2) de véhicules ferroviaires, en prenant en considération au moins un critère de consigne pour le ième véhicule ferroviaire, ainsi qu'en fonction de paramètres (58) de statut se rapport au véhicule, à la localisation et/ou à la voie, on sélectionne une action (60) à appliquer au système (14) d'influence de l'état du ième véhicule ferroviaire, qui, lors de l'application au système (14) d'influence de l'état du ième véhicule ferroviaire, contribue à l'optimisation du bilan d'énergie électrique d'ensemble des systèmes (14) d'influence de l'état de la flotte (2) de véhicules ferroviaires, dans laquelle on sélectionne l'action (60) par l'unité (38) informatique du ième véhicule ferroviaire, en prenant en considération plusieurs critères de consigne pour le ième véhicule ferroviaire, dans lequel au moins une partie des critères de consigne se rapporte à une température de l'espace intérieur du ième véhicule ferroviaire, à une température d'un composant du ième véhicule ferroviaire, à une limite supérieure d'une tension de caténaire à l'emplacement du ième véhicule ferroviaire, à une limite inférieure d'une tension de caténaire à l'emplacement du ième véhicule ferroviaire, à une distance minimum admissible par rapport à un véhicule ferroviaire précédent et/ou à une distance minimum admissible par rapport à un véhicule ferroviaire suivant.
